# EUROPÄISCHE PATENTSCHRIFT

(11) **EP 0 802 127 B1**
(45) Veröffentlichungstag und Bekanntmachung des Hinweises auf die Patenterteilung: **07.11.2001**
(21) Anmeldenummer: 97106364.9
(22) Anmeldetag: 17.04.1997
(51) Int. Cl.: B65F 1/14, B60B 37/00, B60B 33/00

(54) **Radsystem für Müllbehälter**
Wheel system for refuse receptacle
Système de roue pour une poubelle

(30) Priorität: 20.04.1996 DE 19615835
(43) Veröffentlichungstag der Anmeldung: 22.10.1997
(73) Patentinhaber: Gebr. Otto GmbH & Co. KG, 50968 Köln (DE)
(72) Erfinder: Kaiser, Oliver, 42799 Leichlingen (DE); Rohleder, Oliver, 35216 Biedenkopf (DE); Berrenberg, Michael, 57482 Wenden (DE); Fröhlingsdorf, Udo, 57462 Olpe/Biggesee (DE)
(74) Vertreter: COHAUSZ HANNIG DAWIDOWICZ & PARTNER

(56) Entgegenhaltungen:
- EP-A- 0 359 947
- DE-U- 29 502 094
- GB-A- 757 162

## Beschreibung

Die Erfindung betrifft nach dem Stand der Technik einen Müllbehälter aus Kunststoff mit zwei Rädern, die auf einer Achse angeordnet sind, die von der Unterseite des Müllbehälters nach unten vorstehenden und am Müllbehälter angeformten Vorsprüngen gehalten ist, wobei für jedes Rad eine eigene Radachse vorgesehen ist, die in zwei in einem Abstand nebeneinander stehenden Vorsprüngen gehalten insbesondere gelagert ist, wobei das Rad zwischen den Vorsprüngen liegt, wobei die Radachse in Bohrungen einliegt, die die beiden Vorsprünge koaxial durchdringen, und wobei der Abstand zwischen den beiden Vorsprüngen kleiner ist, als der Durchmesser des Rades.

Es sind Behälter aus Kunststoff zur Aufnahme von Müll bekannt, an deren Boden zwei Räder auf einer gemeinsamen Radachse gelagert sind. Die Radachse ist eine starre Achse aus Metall, deren Länge sich über die ganze Breite des Müllbehälters erstreckt. Die Radachse ist durch Bohrungen in Achsstegen geführt, die an dem Müllbehälter angeordnet sind. Auf jedem Ende der Radachse ist ein Rad mit seiner Radnabe aufgesetzt. Gegen ein Abrutschen von der Radachse sind die Räder auf bekannte Weise durch Sicherungselemente gehalten.

Nachteil der bekannten Behälter ist, dass die durchgängige Radachse aus Metall gefertigt sein muss, damit eine ausreichende Stabilität gegen Durchbiegen gewährleistet ist. Diese Radachsen mit den daran aufgehängten Rädern müssen bei der Fertigung des Müllbehälters von Hand montiert werden. Bevor ein solcher Behälter aus Kunststoff einer Wiederverwertung zugeführt werden kann, muss die Radachse aus Metall entfernt werden. Das Abnehmen der Räder und das Entfernen der Radachsen ist wiederum mit einem hohem Aufwand verbunden, der die Wiederverwertung der Behälter verteuert.

Ein weiterer Nachteil der Metallachsen ist, dass es bei Reibung von Kunststoffrädern auf Metallachsen mitunter zu unangenehmen Quietschgeräuschen kommt, die sich nur durch eine ausreichende Schmierung beseitigen lassen. Außerdem trägt die Länge der Radachse bei der Bewegung von Müllbehältern insofern zur Erzeugung lauter Geräusche bei, als die Eigenschwingungen der langen Radachse gut auf die Mülltonne als Resonanzkörper übertragen werden.

Außerdem ist es nachteilig, dass die bekannten Müllbehälter nicht stapelbar sind, da ihre Räder seitlich abstehen. Der Transport und die Lagerung solcher einzelnen Müllbehälter ist jedoch mit erheblichem Raumaufwand verbunden und daher ineffektiv und teuer.

Aus der EP-A-0 359 947 ist eine Anordnung der Räder eines Müllbehälters, die nicht zwischen Vorsprüngen, die vom Müllbehälter abstehen, angeordnet sind. Bei dieser Erfindung stehen die Räder seitlich von den Vorsprüngen ab. Derartige seitlich abstehende Räder sind hinderlich beim Stapeln der Müllbehälter.

Die GB-A- 757 162 offenbart die Befestigung eines Rades zwischen zwei Vorsprüngen bei einem Müllbehälter. Hierbei sind die Räder zwischen den deren Achse tragenden Vorsprüngen angebracht. Nachteilig bei dem Gegenstand der Erfindung ist, dass ein Stapeln nicht möglich ist, da die vorstehenden Räder dies verhindern.

Aufgabe der Erfindung ist es, einen Müllbehälter aus Kunststoff mit einer Radaufhängung zu schaffen, die bei hoher Stabilität die Verwendung von Kunststoffachsen erlaubt und die ein Stapeln der Behälter mit Rädern ermöglicht.

Diese Aufgabe wird erfindungsgemäß durch einen Behälter nach dem Anspruch 1 gelöst.

Ein Vorteil des erfindungsgemäßen Müllbehälters aus Kunststoff ist, dass er ohne weiteres der Wiederverwertung zugeführt werden kann, da die Einzelradaufhängung ohne durchgehende Radachse keine Metallteile aufweist.

Der Müllbehälter kann gemeinsam mit den Radachsen und den Rädern zerschreddert oder zermahlen werden, so dass ein kostengünstiges Recycling möglich wird, da sich die Demontage erübrigt. Außerdem werden durch die Radaufhängung des erfindungsgemäßen Müllbehälters Fertigungskosten gespart, insbesondere da Kunststoffteile günstig gefertigt werden können und sich die Radaufhängungen darüber hinaus für eine automatische Montage eignen.

Zur weiteren Einsparung von Kosten trägt die Tatsache bei, dass die Müllbehälter bei der Lagerung oder beim Transport bequem mit montierten Rädern gestapelt werden können, da die Räder nicht seitlich abstehen, sondern im Wesentlichen unter den Müllbehältern platziert sind. Durch die verborgenen Räder lässt sich das Design des Müllbehälters besonders günstig gestalten.

Besonders vorteilhaft ist es, den Abstand der beiden als Vorsprünge ausgebildeten Aufnahmen möglichst klein insbesondere kleiner als den Raddurchmesser zu konzipieren. Durch eine dem Abstand der Aufnahmen entsprechend kurze Radachse wird eine hohe Stabilität der Radaufhängung erreicht. Durch die beiderseitige kurze Radführung ist gewährleistet, dass keine Biegemomente auf die Radachse ausgeübt werden.

Aufgrund der platzsparenden Einzelradaufhängung kann der Bodenraum des Müllbehälters zwischen den beiden von den Aufnahmen gebildeten Radhäusern kugelförmig ausgeführt werden. Da sich kein Abfall oder Schmutz in vorhandenen Kanten ansammeln kann, begünstigt ein kugelförmiger Behälterboden einerseits das vollständige Entleeren des Müllbehälters und ermöglicht andererseits seine effiziente Reinigung.

Durch die mit besonderen Laufflächen aus thermoplastischen Elastomeren (TPE) ausgestatteten Räder und die Lagerung der Radachsen in Kunststoffnaben wird eine Reduzierung des Geräuschaufkommens beim Bewegen der Müllbehälter erreicht. Zu einem besonders geräuscharmen Lauf tragen außerdem Lagerbuchsen bei, die zwischen der Radnabe und der Radachse montiert werden. Die Lagerbuchsen sind vorteilhafterweise mit Materialzusätzen wie z.B. MOS2, Polytetrafluoroethylen (PTFE) oder Silikonöl versehen, so dass die Reibung zwischen dem Rad und der Radachse reduziert und ein geräuscharmer und leichter Lauf erreicht wird. Damit sie leicht montiert werden können und um Fertigungstoleranzen der Radnabe auszugleichen, sind die Lagerbuchsen auf die gesamte Länge geschlitzt. Vorteilhafterweise bestehen die Lagerbuchsen aus Polyoximethylen (POM) oder Polyamid (PA).

In einer besonderen Ausführungsform der Müllbehälter sind zwei Radpositionen möglich. Die Behälter werden gefertigt und die Räder in der ersten Position montiert. Mit dieser Radposition sind die Müllbehälter stapelbar. Im Gebrauch können die Radachsen in einer zweiten Position, die im Vergleich zur ersten Position nach außen zur Rückseite des Müllbehälters versetzt ist, montiert werden. In einer weiteren Ausführungsform sind am unteren Bereich der Rückseite abstehende Adapter aus Kunststoff mit Aufnahmen anbringbar, die mit entsprechenden Bohrungen als Radaufhängung dienen. Mit derart nach hinten versetzten Radaufhängungen wird die Standfestigkeit des Müllbehälters wegen der vergrößerten Standfläche weiter erhöht.

Besonders vorteilhaft ist es, das System der erfindungsgemäßen Einzelradaufhängung bei Müllbehältern einzusetzen. Der Einsatz ist jedoch nicht auf die Anwendung bei Müllbehältern beschränkt. Stattdessen kann es bei beliebigen Transportbehältern verwendet werden. Es ist darüber hinaus auch denkbar, die Einzelradaufhängung bei Müllbehältern mit mehr als zwei Rädern vorzusehen, so dass auch diese nach ihrem Lebensdauerende problemlos wiederverwertet werden können.

Ein Ausführungsbeispiel des erfindungsgemäßen Müllbehälters ist in der Zeichnung 1 dargestellt und wird im folgenden näher beschrieben.

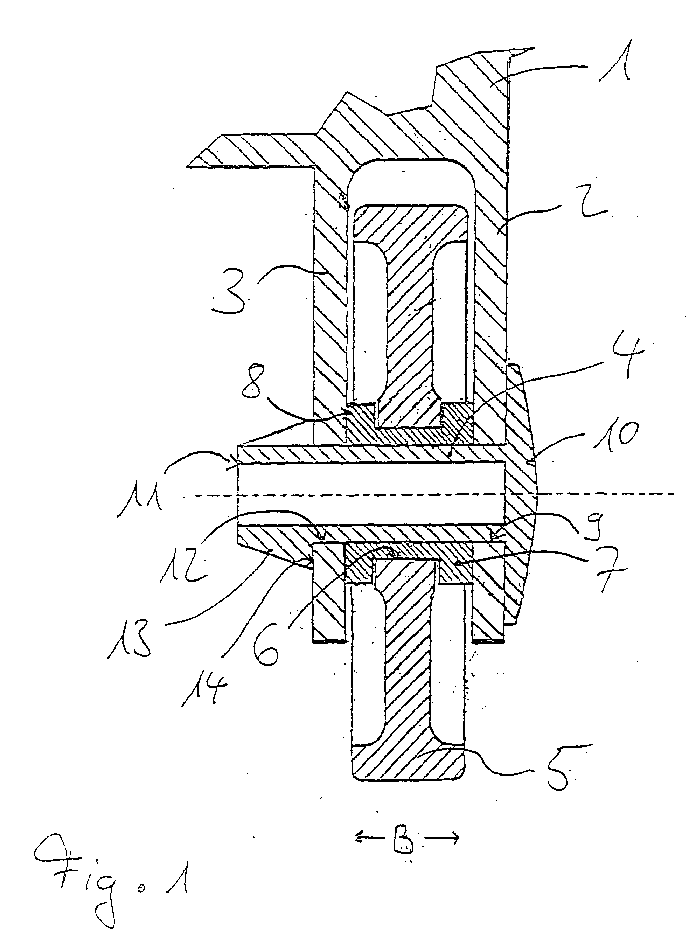

Figur 1 zeigt eine Radaufhängung mit ruhender Radachse.

Figur 1 zeigt die Radaufhängung eines Müllbehälters aus Kunststoff, dessen unterer Bereich 1 teilweise dargestellt ist. Am äußeren Rand des unteren Bereiches 1 sind zwei nach unten vorstehende plattenhafte Vorsprünge 2 und 3 parallel zur Seitenwand des Müllbehälters angeformt. Die Vorsprünge 2 und 3 sind in einem Abstand angeordnet und bilden die Aufnahme für eine Radachse 4. Auf der feststehenden Radachse 4 aus Kunststoff ist zwischen den Vorsprüngen 2 und 3 ein Rad 5 drehbar gelagert, das ebenfalls aus Kunststoff gespritzt ist. Die Figur zeigt lediglich eines der beiden Räder. Das zweite Rad ist entsprechend an der anderen Seite des Müllbehälters aufgehängt.

Um die Laufeigenschaften des Rades 5 zu verbessern ist in die Radnabe 6 eine Gleithülse 7 eingesteckt, die auf der Radachse 4 gleitet. Um die mit Materialzusätzen versehene Gleithülse 7 leichter montieren zu können ist sie der Länge nach aufgeschnitten, so dass ihr Durchmesser durch Druck verkleinert werden kann. Die Länge der Gleithülse 7 ist etwas größer als die Breite B des Rades 5, so dass die Gleithülse 7 seitlich übersteht. Der Abstand der Vorsprünge 2 und 3 entspricht der Länge der Gleithülse, die mit ihren radialen Seitenflächen 8 an den Innenseiten der Vorsprünge 2 und 3 reibend anliegt.

Die Radachse 4 ist in diesem Ausführungsbeispiel durch eine Bohrung 9 im äußeren Vorsprung 2 gesteckt und liegt mit einer kopfartigen Verdickung 10 an der Außenseite des Vorsprungs 2 an. Die eingesteckte Radachse 4 durchragt mit ihrer Spitze 11 eine koaxial in den inneren Vorsprung 3 eingebrachte Bohrung 12. An der Spitze ist eine Zunge 13 angeformt, die in radialer Richtung elastisch ist und die mit einer Kante 14 den Rand der Bohrung 12 auf der Innenseite des Vorsprunges 3 hintergreift. Bei einer Demontage wird die Zunge 13 nach Innen gebogen, bis die Radachse 4 herausziehbar ist. Die Räder 5 und alle Teile der erfindungsgemäßen Radaufnahme sind aus Kunststoff und können bequem wiederverwertet werden.

## Patentansprüche

1. Müllbehälter aus Kunststoff mit zwei Rädern, die auf einer Achse angeordnet sind, die von der Unterseite des Müllbehälters nach unten vorstehenden und am Müllbehälter angeformten Vorsprüngen gehalten ist, wobei für jedes Rad (5) eine eigene Radachse (4) vorgesehen ist, die in zwei in einem Abstand nebeneinander stehenden Vorsprüngen (2,3) gehalten insbesondere gelagert ist, wobei das Rad (5) zwischen den Vorsprüngen (2,3) liegt, wobei die Radachse (4) in Bohrungen (9,12,18) einliegt, die die beiden Vorsprünge (2,3) koaxial durchdringen, und wobei der Abstand zwischen den beiden Vorsprüngen (2,3) kleiner ist, als der Durchmesser des Rades (5), **dadurch gekennzeichnet, dass** die Radachse (4) eine ruhende Achse ist, die durch die Radnabe (6) durchgesteckt ist, wobei an einem Ende der Radachse (4) eine Verdickung (10) angeformt ist, die bei eingesteckter Radachse (4) an der dem Rad (5) abgewandten Außenseite des ersten Vorsprunges (2) anliegt und am anderen Ende der Radachse (4) mindestens eine in radialer Richtung bewegliche Zunge (13) angeformt ist, die bei eingesteckter Radachse (4) die dem Rad (5) abgewandten Außenseite des zweiten Vorsprunges (3) formschlüssig hintergreift.

2. Behälter nach Anspruch 1, **dadurch gekennzeichnet, dass** die Radnabe (6) mit einer Gleithülse (7) ausgekleidet ist, deren Länge größer als die Breite des Rades (5) ist und die mit ihren radialen Seitenflächen (8) an den Innenseiten der Vorsprünge (2,3) anliegt.

3. Behälter nach einem der vorherigen Ansprüche, **dadurch gekennzeichnet, dass** die Radachse (4) und das Rad (5) aus Kunststoff sind.

4. Behälter nach einem der vorherigen Ansprüche, **dadurch gekennzeichnet, dass** die Lauffläche der Räder von einer Elastomerbandage oder einer Laufschicht aus Weichkunststoff insbesondere einem thermoplastischen Elastomer (TPE) gebildet ist.

## Claims

1. A plastics refuse container having two wheels disposed on an axle retained by projections projecting downwards from the underside of the refuse container and moulded thereon, while provided for each wheel (5) is its own wheel axle (4), which is retained, more particularly mounted, in two projections (2, 3) disposed spaced-out one beside the other, the wheel (5) being disposed between the projections (2, 3), while the wheel axle (4) is received in bores (9, 12, 18) which extend coaxially through the two projections (2, 3), the distance between the two projections (2, 3) being smaller than the diameter of the wheel (5), **characterised in that** the wheel axle (4) is an inoperative axle which is inserted through the wheel hub (6), while moulded on one end of the wheel axle (4) is a thickened portion (10), which with the wheel axle (4) inserted bears against the outside of the first projection (2) remote from the wheel (5), and moulded on the other end of the wheel axle (4) is at least one radially movable tongue (13), which when the wheel axle (4) is inserted engages positively behind the outside of the second projection (3) remote from the wheel (5).

2. A container according to claim 1, **characterised in that** the wheel hub (6) is lined with a sliding sleeve (7) whose length is greater than the width of the wheel (5) and which bears via its radial lateral faces (8) against the inner sides of the projections (2, 3).

3. A container according to one of the preceding claims, **characterised in that** the wheel axle (4) and the wheel (5) are made from plastics.

4. A container according to one of the preceding claims, **characterised in that** the rolling surface of the wheels is formed by an elastomeric rim or by a rolling layer of soft plastics, more particularly a thermoplastic elastomer (TPE).

## Revendications

1. Poubelle en matière synthétique avec deux roues qui sont disposées sur un axe, qui font saillie vers le bas depuis la face inférieure de la poubelle et sont maintenues par des saillies conformées sur la poubelle, un axe (4) de roue séparé étant prévu pour chaque roue (5) et étant maintenu, en particulier logé, dans deux saillies (2, 3) disposées côte à côte à écartement, la roue (5) étant disposée entre les saillies (2, 3), l'axe (4) de roue étant inséré dans des alésages (9, 12) qui traversent coaxialement les deux saillies (2, 3) et l'écartement entre les deux saillies (2, 3) étant inférieur au diamètre de la roue (5),
**caractérisée en ce que** l'axe (4) de roue est un axe fixe qui est enfoncé à travers le moyeu (6) de la roue, un épaississement (10) étant conformé à une extrémité de l'axe (4) de roue et étant-en appui, lorsque l'axe (4) de roue est enfoncé, sur la face extérieure de la première saillie (2) écartée de la roue (5) et une languette (13), mobile au moins en direction radiale, étant conformée à l'autre extrémité de l'axe (4) de roue et venant en prise à fermeture géométrique, lorsque l'axe (4) de roue est enfoncé, derrière la face extérieure de la seconde saillie (3) écartée de la roue (5).

2. Récipient selon la revendication 1,
**caractérisé en ce que** le moyeu (6) de la roue est revêtu d'une douille de glissement (7) dont la longueur est supérieure à la largeur de la roue (5) et qui est en appui par ses faces latérales (8) radiales sur les faces intérieures des saillies (2, 3).

3. Récipient selon l'une des revendications précédentes,
**caractérisé en ce que** l'axe (4) de roue et la roue (5) sont en matière synthétique.

4. Récipient selon l'une des revendications précédentes,
**caractérisé en ce que** la surface de roulement des roues est formée par un bandage en élastomère ou une couche de roulement en matière synthétique molle, en particulier un élastomère thermoplastique (TPE).
